(19) Europäisches Patentamt
European Patent Office
Office européen des brevets

(11) **EP 4 542 323 A1**

(12) **EUROPEAN PATENT APPLICATION**
published in accordance with Art. 153(4) EPC

(43) Date of publication:
**23.04.2025   Bulletin 2025/17**

(21) Application number: **23846164.4**

(22) Date of filing: **05.07.2023**

(51) International Patent Classification (IPC):
**G05B 23/02** (2006.01)

(52) Cooperative Patent Classification (CPC):
**G05B 23/02**

(86) International application number:
**PCT/JP2023/024947**

(87) International publication number:
**WO 2024/024431 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.07.2022   JP 2022118438**

(71) Applicant: **Mitsubishi Heavy Industries Thermal
Systems, Ltd.**
Tokyo 100-8332 (JP)

(72) Inventors:
• **NISHIKAWA Naoki**
Tokyo 100-8332 (JP)
• **KUROIWA Toru**
Tokyo 100-8332 (JP)

(74) Representative: **Cabinet Beau de Loménie
158, rue de l'Université
75340 Paris Cedex 07 (FR)**

(54) **MONITORING SYSTEM, MONITORING METHOD, AND PROGRAM**

(57)     Provided is a monitoring system that is capable of determining, with high precision and high reliability, events that occur in a monitored object. The monitoring system comprises a data acquisition unit that acquires a measured value that is measured by a sensor that is provided to the monitored object, an indicator calculation unit that calculates an abnormality degree indicator on the basis of the measured value and a predetermined unit space, and a first determination unit that determines that an abnormality is occurring in the monitored object when a state in which the abnormality degree indicator is equal to or more than a predetermined first threshold value continues in a continuous or intermittent manner for a predetermined first time period or longer.

FIG. 1

**Description**

Technical Field

The present disclosure relates to a monitoring system, a monitoring method, and a program. The present disclosure claims priority based on Japanese Patent Application No. 2022-118438 filed in Japan on July 26, 2022, the contents of which are incorporated herein by reference.

Background Art

Many methods have been proposed in which abnormality detection of equipment, a plant, or the like is performed by monitoring information from a plurality of sensors attached to the equipment and the like. One of such methods is a Mahalanobis-Taguchi method (MT method). In the MT method, a Mahalanobis distance is calculated from multivariate time-series data, and the calculated Mahalanobis distance is used as a representative abnormal degree indicator of the multivariate data, to detect the abnormality of the equipment or the like. For example, PTL 1 discloses a motor control system that determines an abnormality of a motor drive mechanism by comparing a Mahalanobis distance calculated based on time-series data during motor driving with a threshold value.

Citation List

Patent Literature

[PTL 1] Japanese Unexamined Patent Application Publication No. 2019-24305

Summary of Invention

Technical Problem

In a case of the MT method, it is often determined that the abnormality has occurred in a case where the Mahalanobis distance (referred to as a Mahalanobis (MD) value) exceeds the threshold value. However, measured data of various sensors used to calculate the MD value may cause a sudden error or defect due to noise mixed in a communication path. When the MD value is calculated by using such measured data, a large MD value deviating from a normal range may be obtained. As a result, even though a state of the equipment or the like is actually normal, the MD value exceeds the threshold value numerically in a single or intermittent manner, and an alert is issued (false positive). When the alert is issued more than required, the determination of the abnormality lacks reliability.

As an example, in a case of taking a water heater as an example, the water heater has a "high-pressure abnormal stop" function of stopping the operation for safety when a pressure of a refrigerant is excessively high due to some cause such as a pipe clogging in a refrigerant system. Meanwhile, the water heater also has a function called "high-pressure protection". The high-pressure protection is a function of continuing the operation while suppressing a rotation speed of a compressor to a low level in a case where the pressure exceeds a medium pressure threshold value before the high-pressure abnormal stop is reached. It is desirable that the alert should be issued in the former case and the alert should not be issued in the latter case. The high-pressure abnormal stop and the high-pressure protection are events caused by an increase in the pressure of the refrigerant, and generally, the events are determined based on a pressure on a high pressure side of a refrigerant circuit. For example, the high-pressure protection is activated when a state where the high pressure is equal to or higher than P1 (MPa) is continued for T1 (seconds) or longer, and the high-pressure abnormal stop is activated when a state where the high pressure is equal to or higher than P2 (MPa) (P2 > P1) is continued for T2 (seconds) or longer. However, the measured data of the pressure is also affected by noise or the like, and the alert may be issued even in a situation where the high-pressure abnormal stop is not activated in practice. That is, in the related art, it is not easy to accurately discriminate between the event for which the high-pressure abnormal stop is activated and the event for which the high-pressure protection is activated.

The present disclosure provides a monitoring system, a monitoring method, and a program that can achieve the above-described object.

Solution to Problem

An aspect of the present disclosure relates to a monitoring system including: a data acquisition unit that acquires measured values measured by a plurality of sensors provided in a monitoring target; an indicator value calculation unit that calculates an abnormal degree indicator based on the measured values and a predetermined sample; and a first determination unit that determines that an abnormality has occurred in the monitoring target when a state where the abnormal degree indicator is equal to or greater than a predetermined first threshold value is continuously or intermittently continued for a predetermined first time or longer.

Another aspect of the present disclosure relates to a monitoring method including: a step of acquiring measured values measured by a plurality of sensors provided in a monitoring target; a step of calculating an abnormal degree indicator based on the measured values and a predetermined sample; and a step of determining that an abnormality has occurred in the monitoring target when a state where the abnormal degree indicator is equal to or greater than a predetermined first threshold value is continuously or intermittently continued for a predetermined first time or longer.

Still another aspect of the present disclosure relates to a program causing a computer to execute a process including: a step of acquiring measured values measured by a plurality of sensors provided in a monitoring target; a step of calculating an abnormal degree indicator based on the measured values and a predetermined sample; and a step of determining that an abnormality has occurred in the monitoring target when a state where the abnormal degree indicator is equal to or greater than a predetermined first threshold value is continuously or intermittently continued for a predetermined first time or longer.

Advantageous Effects of Invention

With the monitoring system, the monitoring method, and the program described above, it is possible to accurately determine the event occurring in the monitoring target.

Brief Description of Drawings

Fig. 1 is a block diagram showing an example of a monitoring system according to a first embodiment.
Fig. 2 is a diagram showing an example of threshold value setting according to the first embodiment.
Fig. 3 is a flowchart showing an example of abnormality detection processing according to the first embodiment.
Fig. 4A is a diagram showing an example of abnormality prediction in a case where early detection is pursued.
Fig. 4B is a diagram showing an example of the abnormality prediction in a case where both the early detection and the prevention of overlooking and erroneous issuance are pursued.
Fig. 5 is a block diagram showing an example of a monitoring system according to a second embodiment.
Fig. 6 is a flowchart showing an example of threshold value setting processing according to the second embodiment.
Fig. 7 is a block diagram showing an example of a monitoring system according to a third embodiment.
Fig. 8A is a first diagram for describing a state transition according to the third embodiment.
Fig. 8B is a second diagram showing the state transition according to the third embodiment.
Fig. 9 is a flowchart showing an example of state evaluation processing according to the third embodiment.
Fig. 10 is a block diagram showing an example of a monitoring system according to a fourth embodiment.
Fig. 11 is a diagram showing an example of a graph showing a transition of an operation state according to the fourth embodiment.
Fig. 12 is a first flowchart showing an example of alert issuance processing according to the fourth embodiment.
Fig. 13 is a first diagram showing an example of statistical information according to the fourth embodiment.
Fig. 14 is a second diagram showing an example of the statistical information according to the fourth embodiment.
Fig. 15 is a second flowchart showing an example of the alert issuance processing according to the fourth embodiment.
Fig. 16 is a block diagram showing an example of a monitoring system according to a fifth embodiment.
Fig. 17 is a flowchart showing an example of MD value calculation processing according to the fifth embodiment.
Fig. 18 is a block diagram showing an example of a monitoring system according to a sixth embodiment.
Fig. 19A is a first diagram showing prediction processing of an operation state according to the sixth embodiment.
Fig. 19B is a second diagram showing the prediction processing of the operation state according to the sixth embodiment.
Fig. 20 is a flowchart showing an example of the prediction processing of the operation state according to the sixth embodiment.
Fig. 21 is a diagram showing an example of a hardware configuration of the monitoring system according to each of the embodiments.

Description of Embodiments

<First Embodiment>

Hereinafter, a monitoring system according to the present disclosure will be described with reference to the drawings.

(System Configuration)

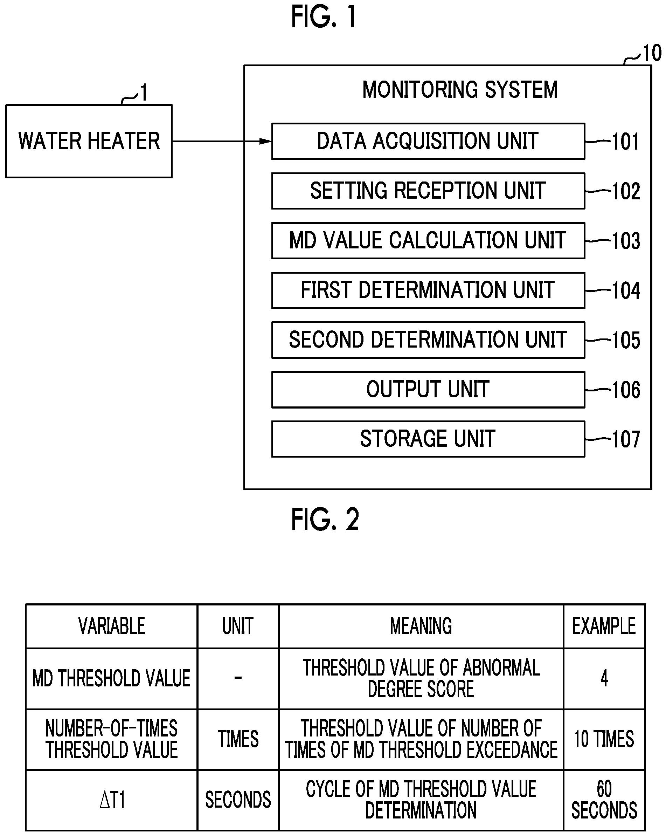

Fig. 1 is a block diagram showing an example of a monitoring system according to a first embodiment. The monitoring system 10 monitors an operation state of a monitoring target, such as equipment or a plant. The equipment that is the monitoring target is not limited, and a case where a water heater 1 is monitored will be described as an example. The water heater 1 is equipment that heats water to produce hot water and supplies the produced hot water. The water heater 1 includes a refrigerant circuit including a compressor and the like, and heats the water by using the refrigerant circuit. Examples of the functions that the monitoring system of the water heater 1 should have include a function of detecting an event that requires high-pressure abnormal stop and an event that requires high-pressure protection to be activated, but the monitoring system 10 accurately discriminates between these two events by using a machine learning method or an abnormality discrimination method of detecting an abnormality by using an abnormal degree indicator calculated based on supervised (training) data or sample (serving as a reference and indicating a normal state) in addition to a related-art abnormality determination method of determining an abnormality by comparing a measured value with a threshold value. In the following embodiments, a case where an MT method is used as an example of the machine learning method or the abnormality discrimination method will be described.

As shown in the drawing, the monitoring system 10 includes a data acquisition unit 101, a setting reception unit 102, an MD value calculation unit 103, a first determination unit 104, a second determination unit 105, an output unit 106, and a storage unit 107.

The data acquisition unit 101 acquires measured values measured by various sensors provided in the water heater 1. For example, the data acquisition unit 101 acquires measured values of a temperature, a pressure, a flow rate, and the like of a refrigerant, water, hot water, and the like at each location of the water heater 1, and a current, a voltage, and the like supplied to the compressor.

The setting reception unit 102 acquires various types of setting information input by a user. For example, the setting reception unit 102 acquires settings of a threshold value for detecting an event for which the high-pressure abnormal stop is activated (referred to as an abnormal event), a threshold value for detecting an event for which the high-pressure protection is activated (referred to as a protective event), and the like. The setting of the threshold value of the abnormal event will be described below with reference to Fig. 2. The threshold value of the protective event is, for example, a threshold value (for example, P1 (MPa)) of a high pressure and a duration (for example, T1 (seconds)) thereof. The setting reception unit 102 records the acquired setting in the storage unit 107.

The MD value calculation unit 103 calculates an MD value (Mahalanobis distance) indicating a state of the water heater 1 based on the measured values acquired by the data acquisition unit 101 and a unit space created in advance. The MD value is a scale that represents magnitude of a difference between a reference sample represented as the unit space and a newly obtained sample, and is an indicator indicating an abnormal degree. Since a method of calculating the Mahalanobis distance is known, the description thereof will be omitted in the present specification. The unit space is, for example, a set of the measured values by the various sensors acquired in a normal operation state of the water heater 1. The unit space is created in advance and stored in the storage unit 107.

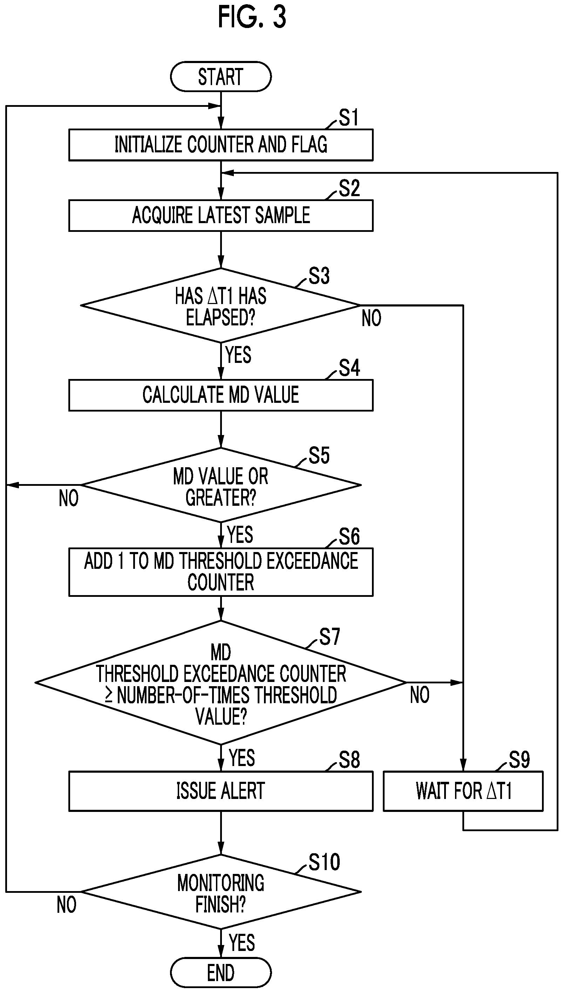

The first determination unit 104 determines whether or not the abnormal event has occurred, based on the MD value calculated by the MD value calculation unit 103. Details of the abnormality determination will be described below with reference to Fig. 3. The first determination unit 104 does not perform the abnormality determination by comparing the measured value (for example, the high pressure of the refrigerant) of one or a plurality of sensors with a threshold value thereof, but performs the abnormality determination based on the MD value. As a result, the abnormal event is accurately discriminated from the protective event.

The second determination unit 105 determines the operation state of the water heater 1 based on the measured values acquired by the data acquisition unit 101. For example, the second determination unit 105 determines that the protective event has occurred when a situation where the value of the high pressure of the water heater 1 acquired by the data acquisition unit 101 is equal to or greater than P1 (MPa) is continued for T1 seconds or longer.

The output unit 106 outputs various types of information on the monitoring of the water heater 1 to a display device or another device. For example, the output unit 106 outputs the determination results obtained by the first determination unit 104 and the second determination unit 105 or issues an alert.

The storage unit 107 stores the measured values acquired by the data acquisition unit 101, the setting information received by the setting reception unit 102, the unit space data used for the calculation of the MD value, and the like.

(Setting Example of Threshold Value of Abnormality Determination)

Fig. 2 shows a setting example of the threshold value and the like used for the abnormality determination by the first determination unit 104. The first determination unit 104 performs the abnormality determination by using an MD threshold value, a number-of-times threshold value, and $\Delta T1$. The MD threshold value is a threshold value for the comparison with the MD value. The number-of-times threshold value is a threshold value for the comparison with the number of times the MD value exceeds the MD threshold value. $\Delta T1$ is a setting of a cycle for the comparison between the MD value and the MD threshold value. The first determination unit 104 compares the MD value calculated by the MD value calculation unit 103 with the MD threshold value (for example, 4) for each $\Delta T1$ (for example, 60 seconds). When the MD value exceeds the MD threshold value, the first determination unit 104 counts the number of times of the MD threshold value exceedance. Then, the first determination unit 104 determines that the abnormal event has occurred when the number of times the MD value exceeds the MD threshold value is equal to or greater than the number-of-times threshold value (for example, 10 times), and outputs the alert.

(Operation)

Next, a flow of abnormality determination processing performed by the first determination unit 104 will be described with reference to Fig. 3.

The various sensors of the water heater 1 continuously measure the temperature, the pressure, and the like and transmit the measured values to the monitoring system 10. In the monitoring system 10, the data acquisition unit 101 acquires the transmitted measured values and records the measured values in the storage unit 107 together with measurement time points.

First, the first determination unit 104 initializes an MD threshold value exceedance counter for counting the number of times of the MD threshold value exceedance and an alert flag indicating whether or not to issue the alert (step S1).

Next, the first determination unit 104 acquires the latest sample (step S2). The first determination unit 104 acquires the latest measured values measured by the various sensors from the storage unit 107.

Next, the first determination unit 104 determines whether or not $\Delta T1$ (seconds) or longer has elapsed since the previous processing (step S3). When $\Delta T1$ or longer has not elapsed (step S3; No), the first determination unit 104 waits for $\Delta T1$ (step S9), and the processing from step S2 is repeated.

When $\Delta T1$ or longer has elapsed (step S3; Yes), the first determination unit 104 outputs the latest measured values to the MD value calculation unit 103 and requests the calculation of the MD value. The MD value calculation unit 103 calculates the MD value from the latest measured values measured by the various sensors (step S4). MD value calculation unit 103 outputs the calculated MD value to the first determination unit 104.

The first determination unit 104 compares the MD value calculated by the MD value calculation unit 103 with the MD threshold value described with reference to Fig. 2, to determine whether or not the MD value is equal to or greater than the MD threshold value (step S5). When the MD value is less than the MD threshold value (step S5; No), the processing from step S1 is repeated.

When the MD value is equal to or greater than the MD threshold value, the first determination unit 104 adds 1 to the MD threshold value exceedance counter (step S6). Next, the first determination unit 104 determines whether or not the MD threshold value exceedance counter is equal to or greater than the number-of-times threshold value (step S7). When the MD threshold value exceedance counter is less than the number-of-times threshold value (step S7; No), the first determination unit 104 waits for $\Delta T1$ (step S9), and the processing from step S2 is repeated.

When the MD threshold value exceedance counter is equal to or greater than the number-of-times threshold value (step S7; Yes), the first determination unit 104 sets TRUE in the alert flag. When the TRUE is set in the alert flag, the output unit 106 issues the alert indicating that the abnormal event has occurred (step S8).

Next, the first determination unit 104 determines whether or not to finish the monitoring (step S10). For example, when an operation for finishing the monitoring is performed by the user, the first determination unit 104 determines to finish the monitoring. When the monitoring is finished (step S10; Yes), the processing of the flowchart of Fig. 3 is finished. When the monitoring is not finished (step S10; No), the processing from step S1 is repeated.

(Effect)

As described above, according to the present embodiment, it is determined that the abnormal event has occurred when the state where the MD value is equal to or greater than the MD threshold value is continued. As a result, it is possible to prevent the alert from being issued in a case where the MD value temporarily exceeds the MD threshold value or greater due to the noise or the like of the sensor measured value and to maintain the reliability of the abnormality determination.

In the related art, since the abnormal event and the protective event are determined based on the high pressure of the refrigerant, it may not be possible to discriminate between the two events. However, according to the present embodiment, the abnormal event is determined based on the MD value calculated from the measured values of the plurality of sensors, and the protective event is determined based on the high pressure. Therefore, it is possible to accurately determine the abnormal event and the protective event without confusing the two events.

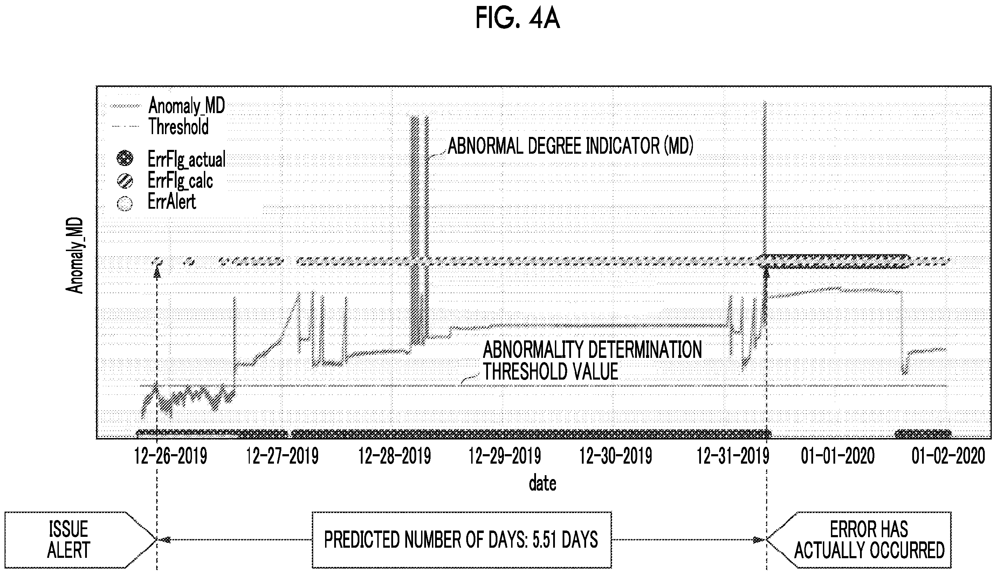

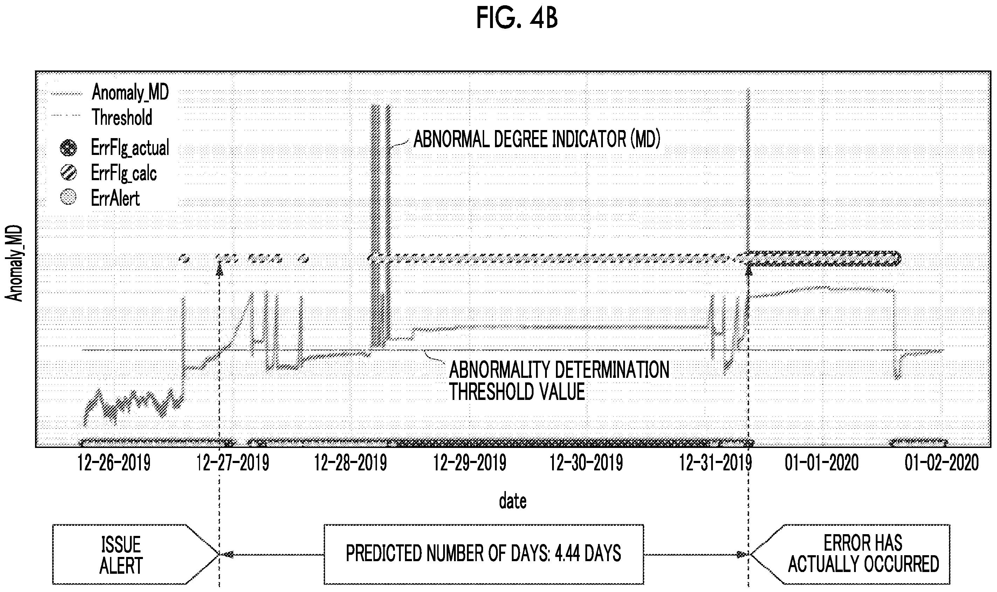

In general, in the abnormality determination, it is desired to (1) detect the abnormality as early as possible and (2) reduce the overlooking of the abnormality and the erroneous issuance, but these events are contradictory events and it is difficult to achieve both events. For example, when only (1) is pursued, the MD threshold value need only be set to be low. However, in this case, erroneous issuance is frequently made, and the abnormality determination has low reliability. On the other hand, according to the present embodiment, it is possible to implement the abnormality monitoring in which (1) and (2) are achieved by adjusting the MD threshold value and the number-of-times threshold value. Fig. 4A shows a graph in a case where the threshold value is set by pursuing the early detection of (1), and Fig. 4B shows a graph in a case where the threshold value is set by considering (2) in addition to (1). In the graphs of Figs. 4A and 4B, a vertical axis indicates an MD value, and a horizontal axis indicates a time. As shown in the drawing, the latter has a shorter predicted number of days, but has a lower possibility of the erroneous issuance. As described above, according to the present embodiment, it is possible to suppress the alert to an event (for example, the protective event) that is a minor event that do not result in the stop due to the abnormal event and allow the operation to continue. As a result, the cost of the unnecessary mobilization of the service personnel can be suppressed. In addition, the stop of the customer-side facility can be avoided.

In the processing shown in Fig. 3, the abnormality determination is performed in a case where the MD value is continuously equal to or greater than the MD threshold value (that is, in a case where a state where the MD value is equal to or greater than the MD threshold value is continuously continued for a predetermined time or longer), but it may be determined that the abnormality has occurred in a case where the MD value is intermittently equal to or greater than the MD threshold value (that is, in a case where a state where the MD value is equal to or greater than the MD threshold value is intermittently continued for a predetermined time or longer). Specifically, for example, the number of times the MD value is equal to or greater than the MD threshold value within a predetermined time may be counted, and it may be determined that the abnormal event has occurred when the number of times is equal to or greater than the threshold value.

The abnormality detected by the processing of Fig. 3 is not limited to the event for which the high-pressure abnormal stop is activated, and other various events can be detected by the same method. For example, the protective event may be detected by the number of times the MD value exceeds the MD threshold value.

<Second Embodiment>

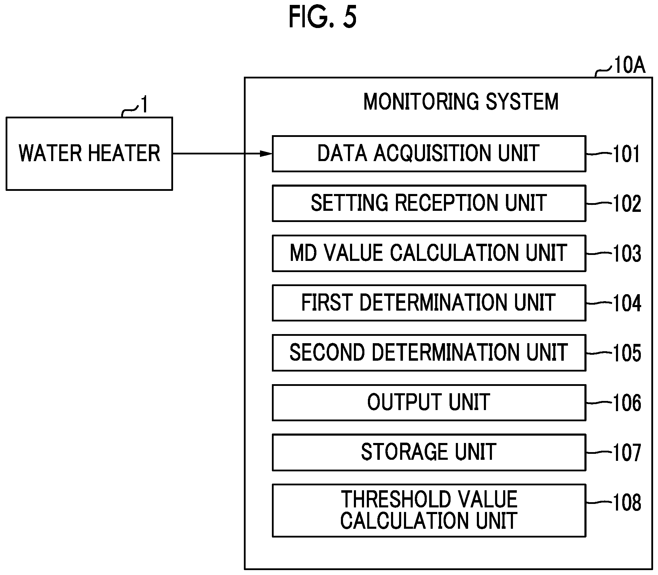

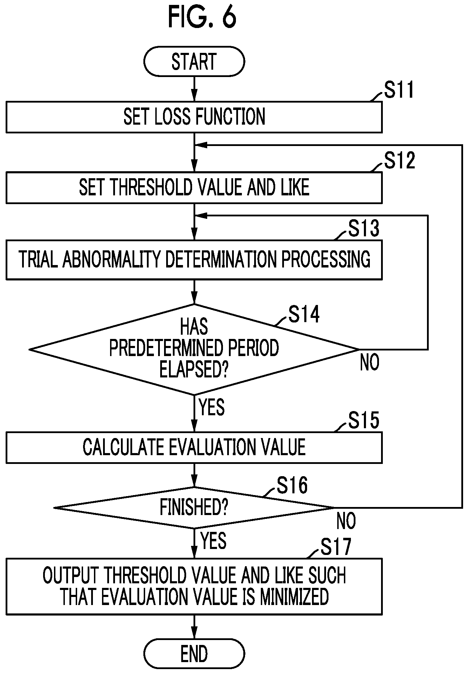

A monitoring system according to a second embodiment of the present disclosure will be described with reference to Figs. 5 and 6. In the first embodiment, the user sets the threshold value and the like shown in Fig. 2. On the other hand, in the second embodiment, a monitoring system 10A calculates an optimum value of the threshold value or the like.

(System Configuration)

Fig. 5 is a block diagram showing an example of the monitoring system according to the second embodiment.

In the configurations according to the second embodiment, the same configuration as the configuration of the monitoring system 10 according to the first embodiment is denoted by the same reference numeral, and the description thereof will be omitted. The monitoring system 10A includes the data acquisition unit 101, the setting reception unit 102, the MD value calculation unit 103, the first determination unit 104, the second determination unit 105, the output unit 106, the storage unit 107, and a threshold value calculation unit 108.

The threshold value calculation unit 108 calculates an appropriate combination of values, such as the threshold value, shown in Fig. 2 by repeating the trial offline. Fig. 6 shows an example of processing of calculating an appropriate threshold value.

(Operation)

Fig. 6 is a flowchart showing an example of threshold value setting processing according to the second embodiment.

The following processing is executed offline. For example, the monitoring system 10A executes the abnormality determination processing via the processing shown in Fig. 3 online, and at the same time, sets various values as the threshold value to execute the trial of the abnormality determination.

First, the user sets a loss function for evaluating the threshold value (step S11). The setting reception unit 102 acquires the loss function and records the loss function in the storage unit 107. The loss function can be represented by, for example, Expression (1) or Expression (1').

$$f = k1 \times \text{false positive ratio} + k2 \times \text{false positive ratio} \cdots (1)$$

$$f = k3 \times (\text{false positive ratio} + \text{false negative ratio}) + k4 \times (\text{false positive ratio} \times \text{false negative ratio}) \cdots (1') \qquad (1')$$

The false positive ratio is a ratio of the number of times the alert is erroneously issued even though the abnormal event has not occurred to the total number of times of the alert issued. Here, the false negative ratio is a ratio of the number of times the alert is not issued to the number of times the abnormal event has occurred. k1 to k4 are weighting coefficients for the false positive ratio or the false negative ratio. Expressions (1) and (1') are examples of the loss function and are not limited to the above-described expressions. The user sets, for example, Expression (1) or Expression (1') and the value such as the coefficient k1. Then, the user sets any initial value for each of the MD threshold value, the number-of-times threshold value, and ΔT1. The setting reception unit 102 acquires the initial value, and sets the acquired value to each threshold value (step S12). Next, the first determination unit 104 performs the trial of the same abnormality determination processing offline by using the MD threshold value, the number-of-times threshold value, and ΔT1 set in step S12 (step S13) in parallel with the online abnormality determination processing (Fig. 3) (independently of the online monitoring while using the actual sensor measured value acquired by the data acquisition unit 101), and records the determination result in the storage unit 107. For example, when, as the result of the trial of the abnormality determination processing performed offline, TRUE is set in the alert flag (corresponding to step S8 in Fig. 3), the first determination unit 104 records a time point thereof and the fact that TRUE is set in the alert flag in the storage unit 107 in association with each other.

Next, the threshold value calculation unit 108 determines whether or not a predetermined period has elapsed since the trial of the abnormality determination processing performed offline is started (step S14). When the predetermined period has not elapsed (step S14; No), the trial of the abnormality determination processing performed offline is continued (step S13). After the predetermined period has elapsed (step S14; Yes), the threshold value calculation unit 108 calculates an evaluation value with respect to the threshold value and the like set in step S12 by using the loss function set in step S11 (step S15). The threshold value calculation unit 108 calculates the evaluation value based on the record of an occurrence time point of the abnormal event, which has occurred in the predetermined period, in the actual abnormal monitoring performed online, the record of the time point at which TRUE is set in the alert flag in the trial of the abnormality determination processing performed offline, and Expression (1) and the like, and records the calculated evaluation value in the storage unit 107 in association with the threshold value set in step S12 and the like. For the abnormal event that has occurred during the predetermined period, for example, the occurrence time point of the abnormal event may be registered in the storage unit 107 by the user, or a time point at which it is determined that the abnormal event has occurred as a result of the abnormality determination performed online by the first determination unit 104 may be used.

Then, the threshold value calculation unit 108 determines whether or not to finish the threshold value calculation processing (step S16). For example, when an operation of giving an instruction to finish the threshold value calculation processing is performed by the user, the threshold value calculation unit 108 determines to finish the threshold value calculation processing. When the threshold value calculation processing is finished (step S16; Yes), the threshold value calculation unit 108 selects the threshold value and the like when the evaluation value is minimized. The output unit 106 outputs the selected threshold value and the like (step S17).

When the threshold value calculation processing is not finished (step S16; No), the processing from step S12 is repeated. In step S12, the user may optionally set the MD threshold value, the number-of-times threshold value, and ΔT1, or the threshold value calculation unit 108 may set these values based on a predetermined rule.

(Effect)

In a case where the processing of Fig. 3 is applied to an individual property (for example, the water heater 1) or another abnormality, it is troublesome and not easy to adjust the threshold value and the like of Fig. 2 each time. According to the present embodiment, the loss function can be expressed as the sum or the product of the false positive ratio and the false negative ratio, or a weighted sum or product with a priority on one or the other thereof, and the threshold value such that the value of the loss function is minimized can be calculated.

<Third Embodiment>

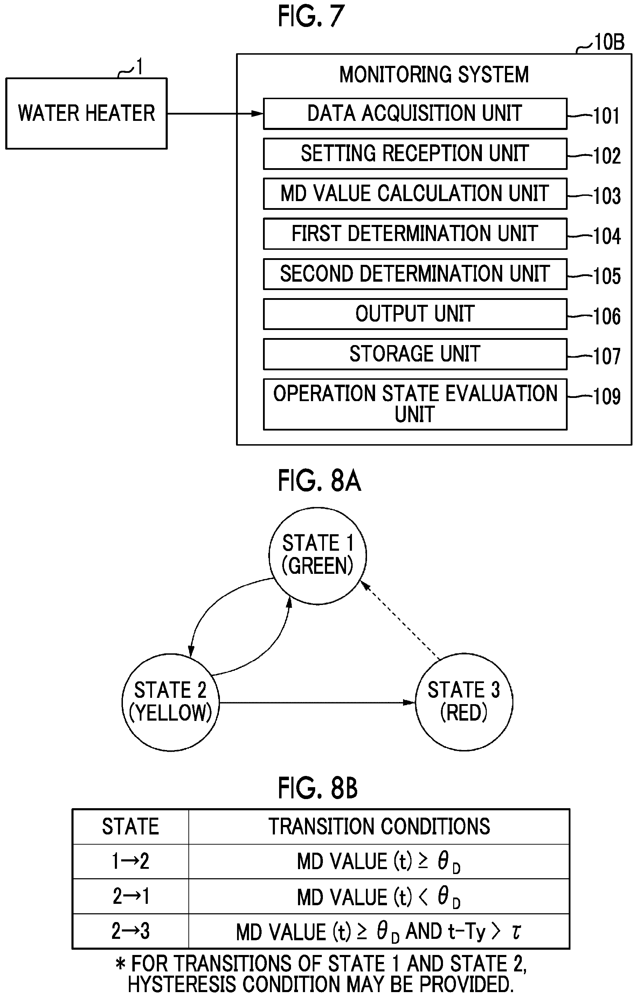

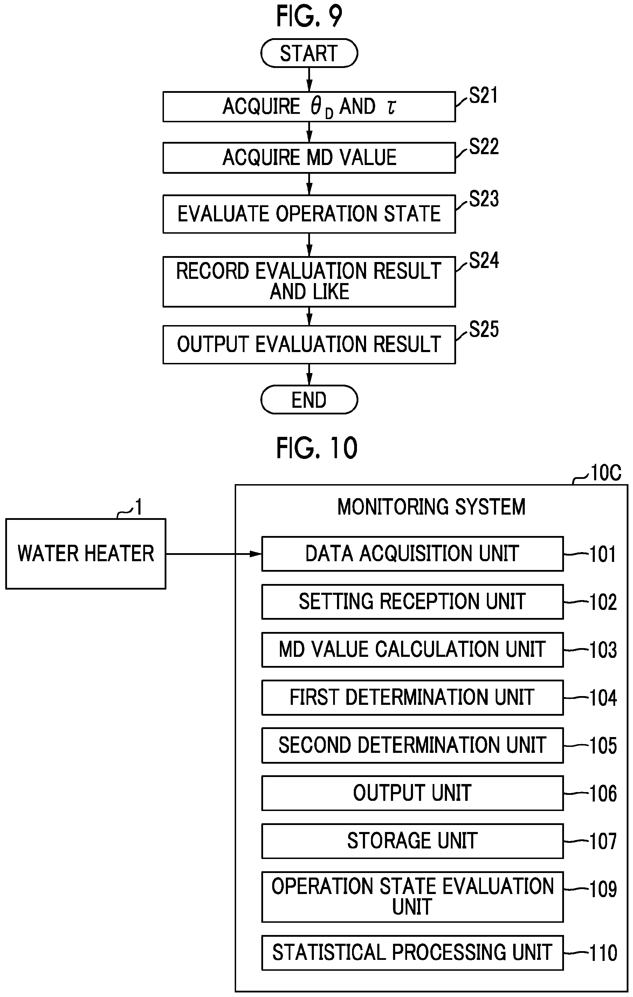

A monitoring system according to a third embodiment of the present disclosure will be described with reference to Figs. 7 and 9. In the monitoring systems 10 and 10A according to the first embodiment and the second embodiment, it is possible to detect the abnormality of the water heater 1 by issuing the alert, but it is not possible to understand whether the water heater 1 is operating normally or operating in a state close to the abnormality although no alert has been issued. In contrast, in the third embodiment, a monitoring system 10B evaluates the operation state of the water heater 1 and notifies of a result of the evaluation. The operation state is, for example, a normal state, an abnormal state, or an intermediate state (a state where the monitoring is required).

(Configuration)

Fig. 7 is a block diagram showing an example of the monitoring system according to the third embodiment.

The monitoring system 10B according to the third embodiment can be combined with either the first embodiment or the second embodiment, but Fig. 7 shows a configuration example in a case where the monitoring system 10B is combined with the first embodiment. In the monitoring systems 10B, the same configuration as the configuration of the monitoring system 10 is denoted by the same reference numeral, and the description thereof will be omitted. The monitoring system 10B includes the data acquisition unit 101, the setting reception unit 102, the MD value calculation unit 103, the first determination unit 104, the second determination unit 105, the output unit 106, the storage unit 107, and an operation state evaluation unit 109.

The operation state evaluation unit 109 evaluates which of a state 1, a state 2, or a state 3 the operation state of the water heater 1 is in. The state 1 is a normal state, the state 2 is a state where the monitoring is required, and the state 3 is a state where the abnormality has occurred. The respective states will be described in more detail with reference to Figs. 8A and 8B.

Fig. 8A shows state transition diagrams of the states 1 to 3. Fig. 8B shows transition conditions to the respective states.

The operation state is the state 1 when the MD value is less than the MD threshold value ($\theta_D$). When the MD value is equal to or greater than the MD threshold value ($\theta_D$), the operation state of the water heater 1 transitions from the state 1 to the state 2. A time point of the transition to the state 2 is denoted by Tsy. When $\tau$ seconds have elapsed since the MD value is equal to or greater than the MD threshold value ($\theta_D$) (t - Tsy > $\tau$, t is the current time point), the operation state of the water heater 1 transitions from the state 2 to the state 3. When the operation state transitions to the state 3, the alert is issued, the high-pressure abnormal stop is activated, and the operation state is reset (the operation state transitions from the state 3 to the state 1). When the MD value is less than the MD threshold value ($\theta_D$) before $\tau$ seconds elapse since the operation state transitions to the state 2, the operation state of the water heater 1 transitions from the state 2 to the state 1. The threshold value ($\theta_{D'}$) when the transition from the state 2 to the state 1 is performed may be set to be less than the threshold value ($\theta_D$) when the transition from the state 1 to the state 2 is performed, and the transition conditions between the state 1 and the state 2 may have a hysteresis width. By evaluating the operation state of the water heater 1 by classifying the operation state into the states 1 to 3 in this way, it is possible to discriminate between the normal operation state and the operation state close to the abnormality. $\theta_D$ of the MD threshold value and the threshold value $\tau$ of the duration of the state 2 may be determined in advance or may be set by the user. $\tau$ is, for example, the same time as $\Delta T \times$ number-of-times threshold value in the first embodiment. Next, evaluation processing of the operation state according to the present embodiment will be described with reference to Fig. 9.

(Operation)

Fig. 9 is a flowchart showing an example of the evaluation processing of the operation state according to the third embodiment.

The user inputs the threshold value $\theta_D$ and the threshold value $\tau$ in advance. The setting reception unit 102 acquires these threshold values, and records the acquired threshold values in the storage unit 107. Alternatively, the storage unit 107 registers the threshold value $\theta_D$ and the threshold value $\tau$ in advance. The operation state evaluation unit 109 reads out and acquires the threshold value $\theta_D$ and the threshold value $\tau$ from the storage unit 107 (step S21). The monitoring system 10B executes the abnormality determination processing shown in Fig. 3. For example, the MD value calculation unit 103 calculates the MD value (step S4 in Fig. 3). The MD value calculation unit 103 outputs the calculated MD value to the first determination unit 104 and the operation state evaluation unit 109. The first determination unit 104 executes the processing of Fig. 3. Meanwhile, the operation state evaluation unit 109 evaluates the operation state. Specifically, the operation state evaluation unit 109 acquires the MD value from the MD value calculation unit 103 (step S22). The operation state evaluation unit 109 evaluates the operation state based on the acquired MD value (step S23). The operation state evaluation unit 109 evaluates which of the states 1 to 3 the operation state of the water heater 1 is in, based on the transition conditions shown in Fig. 8B. The operation state evaluation unit 109 records the evaluation result of the operation state, the MD value, and the time point at which the MD value is acquired in the storage unit 107 in association with each other (step S24), and outputs the evaluation result to the output unit 106. The output unit 106 outputs the evaluation result (step S25). For example, in a case where the evaluation is performed as the state 2, the state 2 is displayed on a monitor to be monitored by the user. As a result, the user can understand whether the water heater 1 is operating in a normal state or in a state close to the abnormality in a situation in which the alert is not issued.

(Effect)

According to the present embodiment, the monitoring system 10B can evaluate the operation state of the water heater 1 and notify the user of the evaluation result, in addition to determining whether or not the abnormality has occurred in the water heater 1. As a result, even in a situation in which the alert is not issued, it is possible to understand whether the operation state of the water heater 1 is a normal state, a state close to the abnormality, or a state where the alert may be issued at any time. In the above-described embodiment, the operation states of the water heater 1 are classified into the state 1 to the state 3, but the operation states may be further subdivided and evaluated. In addition to the MD value, other parameters may be used to evaluate the operation state.

<Fourth Embodiment>

Hereinafter, a monitoring system according to a fourth embodiment of the present disclosure will be described with reference to Figs. 10 to 15. A monitoring system 10C according to the fourth embodiment has a function of providing the user with time point history data or statistical information based on the time point history data of the operation state, in addition to evaluating the operation state of the water heater 1.

(Configuration)

Fig. 10 is a block diagram showing an example of the monitoring system according to the fourth embodiment.
The monitoring system 10C according to the fourth embodiment includes the data acquisition unit 101, the setting reception unit 102, the MD value calculation unit 103, the first determination unit 104, the second determination unit 105, the output unit 106, the storage unit 107, the operation state evaluation unit 109, and a statistical processing unit 110.
The statistical processing unit 110 generates a graph showing the transition of the operation state of the water heater 1 or generates statistical information of the state 2 based on the time point history data of the evaluation results of the operation state recorded in the storage unit 107 by the operation state evaluation unit 109. The output unit 106 outputs the graph or statistical information generated by the operation state evaluation unit 109 to the display device or the like. The other functional units are as described in the first to third embodiments.

(Operation)

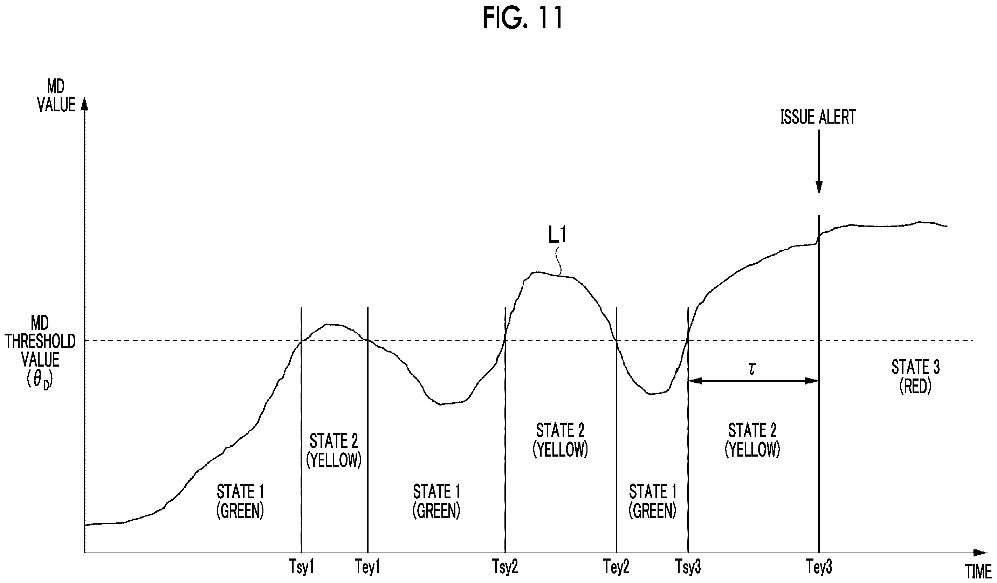

Fig. 11 shows an example of a graph that is generated by the statistical processing unit 110 and that shows the transition of the operation state. The statistical processing unit 110 reads out the information on the MD value, the operation state, and the time point recorded by the processing (step S23) described with reference to Fig. 9 from the storage unit 107, generates the graph as shown in Fig. 11, and outputs the generated graph to the display device by the output unit 106. In the graph in Fig. 11, a vertical axis indicates an MD value, and a horizontal axis indicates a time. In the drawing, a broken line indicates the MD threshold value, and a curve L1 indicates the transition of the MD value. The operation state is the state 1 when the value of L1 is less than the MD threshold value ($\theta_D$), and this region is displayed in, for example, green. The operation state is the state 2 when the value of L1 is equal to or greater than the MD threshold value ($\theta_D$) and the length of the period (Tsy to Tey) is less than $\tau$, and this region is displayed in, for example, yellow. The evaluation is performed as the state 3 when a state where the value of L1 is equal to or greater than the MD threshold value ($\theta_D$) for $\tau$ or longer, and this region is displayed in, for example, red. By referring to the graph of Fig. 11, the user can easily understand the transition and the tendency of the operation state of the water heater 1, such as that the operation in the state 1 is continued for a long period or that the state 2 is increased. In a case where the alert is issued, it is possible to visually understand when the abnormal operation state has occurred. For example, in a case of Fig. 11, the alert is issued at a time point Tey3. The abnormality (the MD value is equal to or greater than the MD threshold value $\theta_D$) that is a cause of the alert is started at a time point Tsy3 going back $\tau$ (seconds) from the time point Tey3. With the graph of Fig. 11, the user can easily understand the start time point Tsy3 of the abnormal state, and thus the user can use the start time point Tsy3 of the abnormal state for taking measures for the abnormal state or for finding out the cause of the abnormal state. By the user's operation or always, the statistical processing unit 110 may display the graph as shown in Fig. 11 on a monitoring screen. The first determination unit 104 may be configured to notify of the occurrence time point of the abnormality when the alert is issued, in cooperation with the statistical processing unit 110.

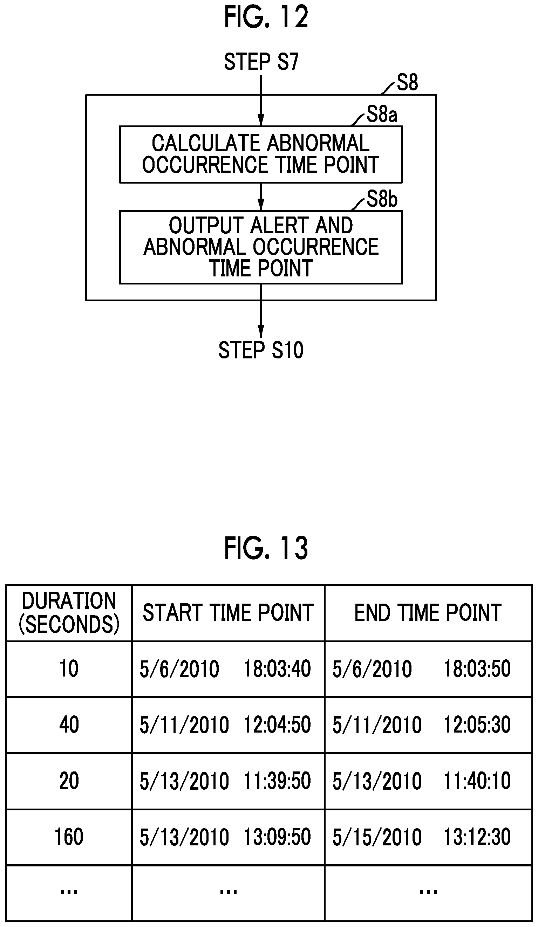

Fig. 12 shows an example of alert issuance processing according to the fourth embodiment. The flowchart shown in Fig. 12 corresponds to step S8 in Fig. 3. The first determination unit 104 sets TRUE in the alert flag in the processing of step S7. Then, the statistical processing unit 110 (or the first determination unit 104) calculates the abnormality occurrence time point by subtracting $\tau$ (seconds) from the time point at which TRUE is set in the alert flag ($\approx$ the time point at which the transition to the state 3 is evaluated by the operation state evaluation unit 109) (step S8a). The statistical processing unit 110 outputs the abnormality occurrence time point to the output unit 106. Next, the output unit 106 outputs the alert and the abnormality occurrence time point (step S8b). As a result, the user can understand the abnormality occurrence time point when the alert is issued.

In this way, it is possible to obtain information useful for monitoring the water heater 1 from the time point history data of the operation state. In the actual monitoring scene, it is important to accurately understand a transitional situation from normal to abnormal, that is, an occurrence situation of the state 2, rather than the state 1 or the state 3, and observe the progression. For example, when the number of times of the occurrence of the state 2 or the ratio of the state 2 tends to increase, it is possible to predict that the occurrence of the abnormality is approaching and to prepare for the abnormality.

Fig. 13 shows an example of the statistical information generated by the statistical processing unit 110. A table in Fig. 13 is a list of a start time point and an end time point of the state 2 and a duration thereof. The statistical processing unit 110 extracts, for example, data evaluated as the state 2 in the most recent one week from the time point history data of the evaluation results of the operation state recorded in the storage unit 107, and generates a list as shown in Fig. 13. The output unit 106 outputs the generated list to the display device. The user can check the occurrence situation of the state 2 by looking at this list. For example, in the example of Fig. 13, it is possible to understand that the operation state of the state 2 is gradually being extended for a long period.

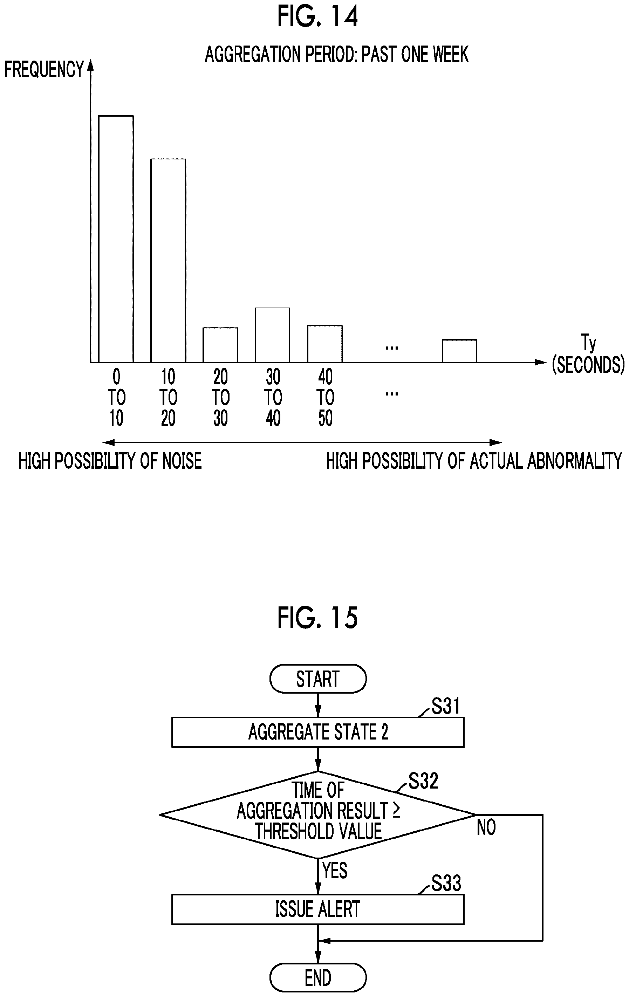

Fig. 14 shows another example of the statistical information generated by the statistical processing unit 110. A histogram of Fig. 14 shows the occurrence frequency of the state 2 for each duration in the past one week. The histogram in Fig. 14 is information that is generated by the statistical processing unit 110 and that is output by the output unit 106. Referring to Fig. 14, it can be seen that the occurrence frequency of the state 2 with the duration of 0 to 10 seconds is the highest, and the occurrence frequency of the state 2 with the duration of 10 to 20 seconds is the second highest. In a case where the duration is short, the cause is likely to be due to the influence of the noise of the sensor, a temporary disturbance, or the like, and it may not be important from the viewpoint of the abnormality monitoring. On the contrary, in a case where the duration of the state 2 is long even in a case of being less than $\tau$, it is highly likely that some abnormality has actually occurred or is occurring, and the occurrence of such a state is suspected even though the alert is not issued in a case where the state occurs at a high frequency. The user can check the property of the occurring state 2 (whether it is caused by the noise or whether it is a state suspected to be abnormal) and the frequency thereof by the histogram shown in Fig. 14.

The condition for the state 3 is not satisfied, but it may be configured to issue an alert different from the step S8 by regarding that a cumulative time of the state 2 is equal to or longer than a certain time as a kind of abnormality. Fig. 15 is a second flowchart showing an example of the alert issuance processing according to the fourth embodiment.

The statistical processing unit 110 reads out, for example, data when the evaluation is performed as the state 2 in the past one week from the evaluation result of the operation state and the time point history data of the time point recorded in the storage unit 107, and aggregates the data (step S31). Specifically, the total of operation times evaluated as the state 2 is calculated by the aggregation. In this case, the statistical processing unit 110 may use only data in a case where the state 2 is continued for a predetermined time or longer as an aggregation target in order to exclude data with a high possibility of noise. Next, the statistical processing unit 110 determines whether or not the total operation time of the state 2 in the past one week is equal to or longer than the threshold value by comparing the aggregation result time with the threshold value (step S32). When the total operation time of the state 2 is equal to or longer than the threshold value (step S32; Yes), the output unit 106 is instructed to issue the alert. The output unit 106 issues, for example, the alert having a content indicating that the occurrence of the abnormality is suspected (step S33). As a result, even in a case where the alert is not issued in the processing of Fig. 3, it is possible to detect a state where the occurrence of the abnormality is suspected from the occurrence situation of the state 2 and notify the user of the state. By performing, for example, the inspection of the water heater 1, the user who sees this alert can prevent the occurrence of a larger accident or the like in advance.

(Effect)

As described above, according to the fourth embodiment, it is possible to understand the change or the trend of the operation state of the water heater 1. As a result, it is possible to expect the occurrence of the abnormality and take measures to prevent the occurrence of the abnormality before an actual abnormality occurs.

<Fifth Embodiment>

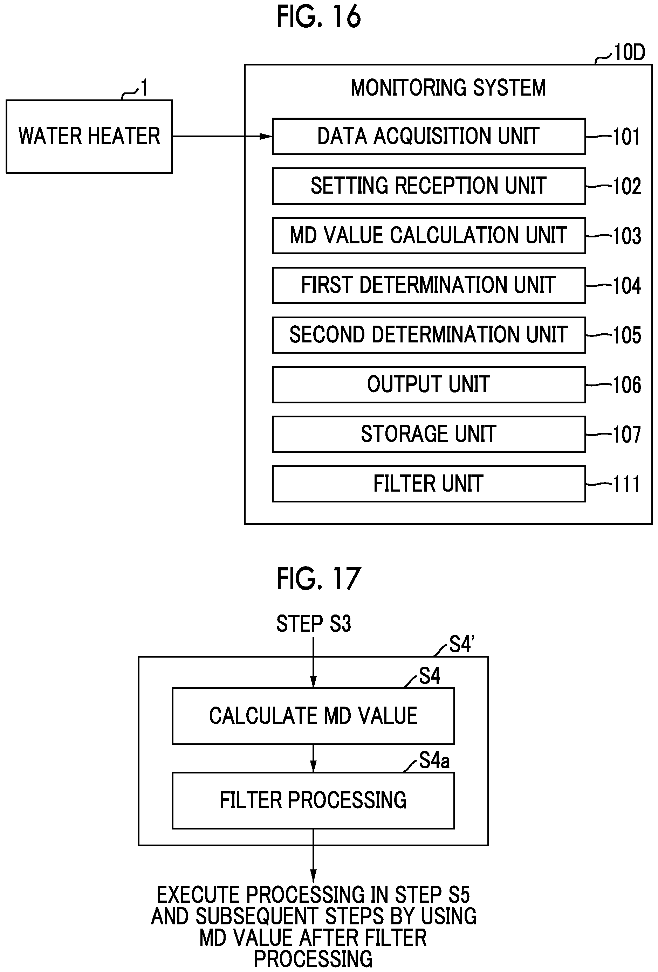

Hereinafter, a monitoring system according to a fifth embodiment of the present disclosure will be described with reference to Fig. 16 and Fig. 17. A monitoring system 10D according to the fifth embodiment has a feature in a method of calculating the MD value. The MD value may be changed due to the influence of noise or the like of the measured value of the sensor, but the MD value is calculated by performing filter processing to remove a high-frequency component (noise or change) in order to reduce the change of the MD value.

(Configuration)

Fig. 16 is a block diagram showing an example of the monitoring system according to the fifth embodiment. The fifth embodiment can be combined with either the first embodiment, the second embodiment, the third embodiment, the fourth embodiment, or a sixth embodiment which will be described below, but Fig. 16 shows a configuration combined with the monitoring system 10 according to the first embodiment. The monitoring system 10D according to the fifth embodiment includes the data acquisition unit 101, the setting reception unit 102, the MD value calculation unit 103, the first determination unit 104, the second determination unit 105, the output unit 106, the storage unit 107, and a filter unit 111.

The filter unit 111 performs the filter processing corresponding to a low-pass filter, such as a moving average or a first-order lag filter, on the MD value calculated by the MD value calculation unit 103. In a simple example (example of moving average), when the MD value calculated by the MD value calculation unit 103 at the time point t is denoted by MD0, the MD value calculated by the MD value calculation unit 103 at a time point t+1 is denoted by MD1, the MD value calculated by the MD value calculation unit 103 at a time point t+2 is denoted by MD2, and the MD value calculated by the MD value calculation unit 103 at a time point t+3 is denoted by MD3, the filter unit 111 calculates the MD value smoothed by (MD0 + MD1 + MD2 + MD3)/4, and defines this value as the MD value at the time point t+3. As a result, the noise resistance of the MD value can be improved.

(Operation)

Fig. 17 shows an example of MD value calculation processing according to the fifth embodiment. The processing step S4' of the flowchart shown in Fig. 17 corresponds to step S4 of Fig. 3, and step S4 of Fig. 3 is replaced with step S4' to perform the abnormality determination processing by using the MD value after smoothing according to the fifth embodiment.

The MD value calculation unit 103 calculates the latest MD value (step S4). Next, the filter unit 111 executes the filter processing using the low-pass filter on the calculated latest MD value (step S4a). The filter unit 111 outputs the smoothed MD value after the filter processing to the first determination unit 104. The first determination unit 104 executes the processing in step S5 and subsequent steps of Fig. 3 by using the smoothed MD value. The number-of-times threshold value in step S7 may be set to a smaller value than that in the first embodiment as the MD value is smoothed. In a case where the abnormality determination is performed by using the MD value after the filter processing, it cannot be said that the abnormality has occurred at the time point simply going back $\tau$ from the time point at which TRUE is set in the alert flag. However, on the other hand, when the value of the number-of-times threshold value can be set to be small, there is a possibility that the abnormality can be detected earlier than in the first embodiment while maintaining the accuracy of the abnormality determination.

(Effect)

As described above, according to the fifth embodiment, it is possible to improve the noise resistance of the MD value.

<Sixth Embodiment>

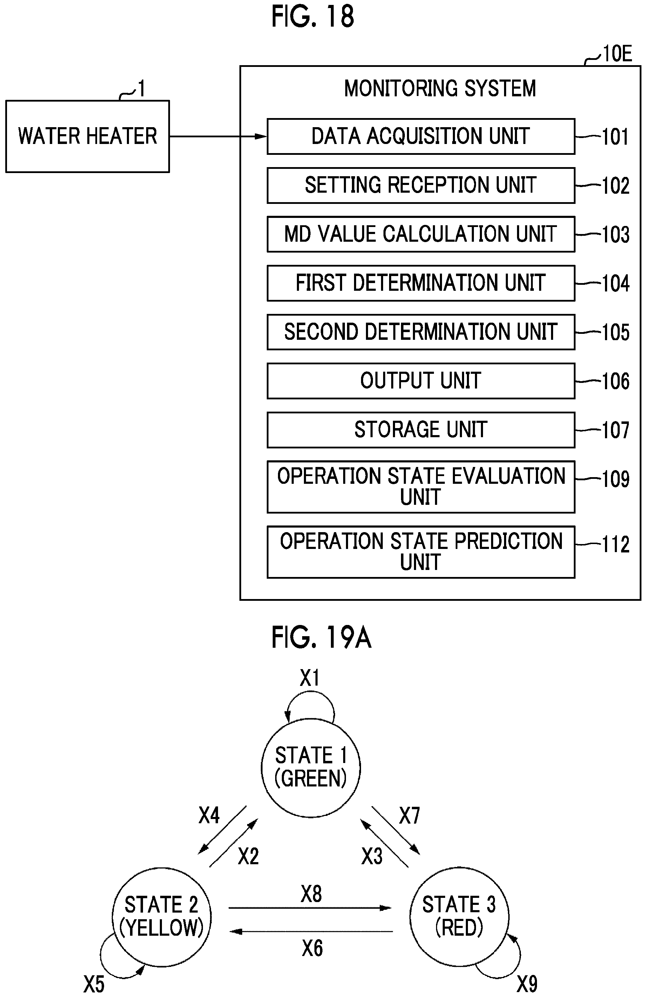

Hereinafter, a monitoring system according to a sixth embodiment of the present disclosure will be described with reference to Fig. 18 to Fig. 20. A monitoring system 10E according to the sixth embodiment has a function of predicting the occurrence of the abnormality based on the evaluation result of the operation state of the water heater 1.

(Configuration)

Fig. 18 is a block diagram showing an example of the monitoring system according to the sixth embodiment. The sixth embodiment can be combined with either the third embodiment or the fourth embodiment, but Fig. 18 shows a configuration combined with the monitoring system 10 according to the third embodiment.

A monitoring system 10E according to the sixth embodiment includes the data acquisition unit 101, the setting reception unit 102, the MD value calculation unit 103, the first determination unit 104, the second determination unit 105, the output unit 106, the storage unit 107, the operation state evaluation unit 109, and an operation state prediction unit 112.

The operation state prediction unit 112 analyzes the state transition probabilities of the state 1, the state 2, and the state 3 based on the time point history data of the evaluation results of the operation state recorded in the storage unit 107 by the operation state evaluation unit 109, and predicts the operation state of the water heater 1 based on the analysis results. The output unit 106 outputs the graph or statistical information generated by the operation state prediction unit 112 to the display device or the like. The other functional units are as described in the first to third embodiments.

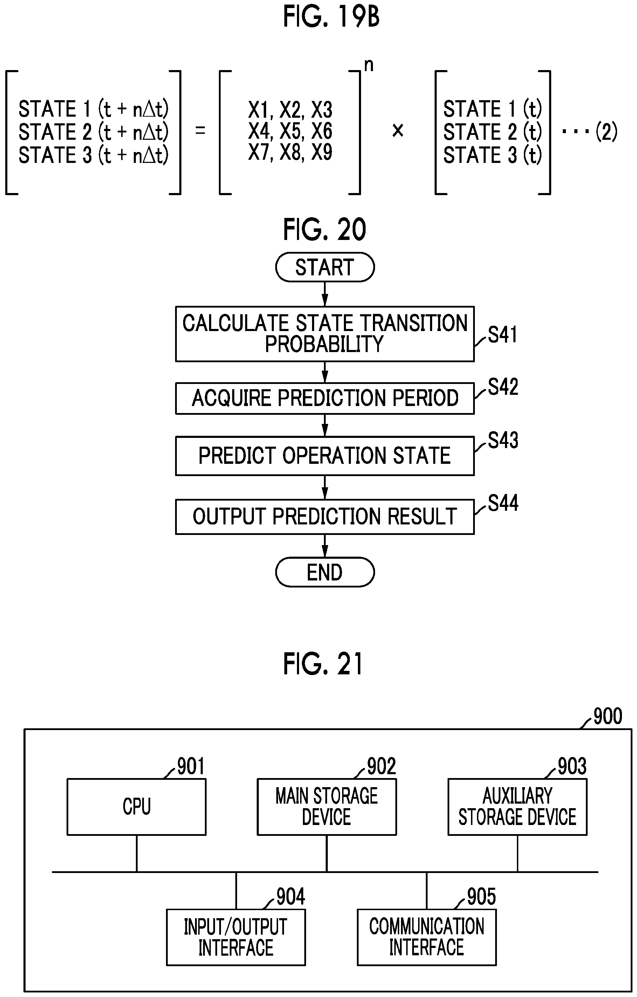

Fig. 19A shows state transition diagrams of the states 1 to 3. The operation state prediction unit 112 aggregates a relationship between the operation state at a certain time point t and the operation state at a time point $t+\Delta t$ based on the past time point history data of the operation state recorded in the storage unit 107. For example, when the operation state of the water heater 1 is the state 1 at the time point t, the probability X1 that the operation state of the water heater 1 remains in the state 1 after $\Delta t$ is calculated. Similarly, the operation state prediction unit 112 calculates the probability X4 of being in the state 2 and the probability X7 of being in the state 3 after $\Delta t$ when the operation state is the state 1 at the time point t, calculates the probability X5 of remaining in the state 2, the probability X2 of being in the state 1, and the probability X8 of being in the state 3 after $\Delta t$ when the operation state is the state 2 at the time point t, and calculates the probability X9 of remain in the state 3, the probability X3 of being in the state 1, and the probability X6 of being in the state 2 when the operation state is the state 3 at the time point t. When the probabilities X1 to X9 can be calculated, the probabilities can be summarized as in Expression (2) of Fig. 19B. n of Expression (2) is a parameter for designating how many future operation states are predicted. When n = 1, a prediction expression for predicting the operation state after $\Delta t$ is obtained. When n = 2, a prediction expression for the operation state after $\Delta t \times 2$ is obtained. The operation state prediction unit 112 predicts the future operation state of the water heater 1 based on Expression (2).

(Operation)

Fig. 20 shows an example of prediction processing of the operation state according to the sixth embodiment. First, the operation state prediction unit 112 calculates the state transition probability (step S41). As described with reference to Figs. 19A and 19B, the operation state prediction unit 112 calculates the state transition probabilities among the states 1 to 3 based on the time-series data of the evaluation results (states 1 to 3) of the operation state. As a result, Expression (2) is obtained. Next, the user sets a prediction period. For example, when $\Delta T$ = 30 minutes and the operation state after 1 hour to 24 hours is to be predicted, $\Delta T$ is set to 2 to 48. The setting reception unit 102 acquires the setting of the prediction period, and records the setting in the storage unit 107 (step S42). Next, the operation state prediction unit 112 predicts the operation state in the prediction period set in step S42, based on the latest operation state evaluated by the operation state evaluation unit 109 and Expression (2) (step S43). For example, for the operation state after 1 hour, the operation state evaluation unit 109 substitutes the latest operation state evaluated by the operation state evaluation unit 109 into Expression (2) (n = 2), to predict the probability of being in the state 1 after 1 hour, the probability of being in the state 2 after 1 hour, and the probability of being in the state 3 after 1 hour. For example, the operation state after 2 hours is predicted by substituting the probabilities of the states 1 to 3 after 1 hour calculated in the previous stage into Expression (2) (n = 2). Similarly, the operation state prediction unit 112 also predicts the operation state after 3 hours to 24 hours. Then, the output unit 106 outputs the prediction result by the operation state prediction unit 112 to the display device or the like (step S44).

(Effect)

As described above, according to the sixth embodiment, it is possible to predict the future operation state of the water heater 1.

In the above-described embodiment, the abnormality determination by using the MT method has been described as an example, but the method of the abnormality determination is not limited to the MT method, and for example, various abnormality determination methods using machine learning or the like can be applied. For example, the unit space in the MT method may be supervised data or sample as a reference (for example, process data in a normal state), or a trained model constructed by training using the supervised data or sample as a reference, and the MD may be an abnormal degree indicator (for example, a determination result based on the trained model or a confidence level based on the determination result) calculated in various abnormality determination methods.

Fig. 21 is a diagram showing an example of a hardware configuration of the monitoring system according to each of the embodiments.

A computer 900 includes a CPU 901, a main storage device 902, an auxiliary storage device 903, an input/output interface 904, and a communication interface 905.

The above-described monitoring system 10 is mounted in the computer 900. Each of the above-described functions is stored in the auxiliary storage device 903 in a form of a program. The CPU 901 reads out the program from the auxiliary storage device 903, loads the program in the main storage device 902, and executes the above-described processing in accordance with the program. The CPU 901 allocates a storage area in the main storage device 902 in accordance with the program. The CPU 901 allocates a storage area for storing data being processed in the auxiliary storage device 903 in accordance with the program.

By recording a program for implementing all or some of the functions of the monitoring system 10 on a computer-readable recording medium, reading the program recorded on the recording medium into a computer system, and executing the read program, the processing via each functional unit may be performed. The "computer system" described herein includes an OS and hardware such as peripheral equipment. The "computer system" also includes a homepage providing environment (or display environment) in a case where a WWW system is used. The "computer-readable recording medium" means a portable medium such as a CD, a DVD, or a USB, or a storage device such as a hard disk built in the computer system. In a case where the program is distributed to the computer 900 by a communication line, the computer 900 to which the program is distributed may load the program in the main storage device 902 and execute the above-described processing. The above-described program may be a program for implementing a part of the above-described functions, or may be a program for further implementing the above-described functions in combination with a program that has already been recorded in the computer system.

As described so far, some embodiments according to the present disclosure have been described, but all of these embodiments are presented as examples and are not intended to limit the scope of the invention. These embodiments can be implemented in various other forms, and various omissions, replacements, and changes can be made without departing from the gist of the invention. These embodiments and modifications thereof are included within the scope and gist of the invention, as well as within the scope of the invention as described in the claims and equivalents thereof.

<Supplementary Notes>

For example, the monitoring system, the monitoring method, and the program according to each embodiment are understood as follows.

(1) A first aspect relates to a monitoring system including: a data acquisition unit that acquires measured values measured by a plurality of sensors provided in a monitoring target; an indicator value calculation unit (MD value calculation unit) that calculates an abnormal degree indicator (Mahalanobis distance) based on the measured values and a predetermined unit space; and a first determination unit that determines that an abnormality has occurred in the monitoring target when a state where the abnormal degree indicator (Mahalanobis distance) is equal to or greater than a predetermined first threshold value is continuously or intermittently continued for a predetermined first time or longer.

As a result, highly accurate and highly reliable abnormality detection can be performed.

(2) A second aspect relates to the monitoring system according to (1), further including: a threshold value calculation unit that calculates a combination of the first threshold value and the first time such that a value of a loss function for calculating magnitude of an error in a determination result of the first determination unit is minimized, in which the loss function uses, as a parameter, a probability that no abnormality has occurred in the monitoring target when the first determination unit determines that the abnormality has occurred and/or a probability that the abnormality has occurred in the monitoring target when the first determination unit does not determine that the abnormality has occurred (for example, for a first value obtained by multiplying the probability that no abnormality has occurred in the monitoring target when the first determination unit determines that the abnormality has occurred by any weighting coefficient, and a second value obtained by multiplying the probability that the abnormality has occurred in the monitoring target when the first determination unit does not determine that the abnormality has occurred by any weighting coefficient, calculates a combination of the first threshold value and the first time such that the sum of the first value and the second value, the product of the first value and the second value, or a value calculated by the sum and the product is minimized).

As a result, a value of an appropriate threshold value and the like can be automatically set.

(3) A third aspect relates to the monitoring system according to (1) or (2), further including: a second determination unit that determines that an event requiring attention (for example, a protective event) has occurred in the monitoring target, based on the measured value measured by one or a plurality of sensors among the plurality of sensors and a threshold value provided for each of the measured values, when the measured value is equal to or greater than the threshold value or is less than the threshold value.

As a result, the occurrence of the event requiring attention can be determined in a discriminated manner from the abnormality of the first aspect.

(4) A fourth aspect relates to the monitoring system according to any one of (1) to (3), further including: an operation state evaluation unit that evaluates an operation state of the monitoring target, in which the operation state evaluation unit evaluates a state where the abnormal degree indicator (Mahalanobis distance) is less than the first threshold value as a first state, evaluates a state where the state where the abnormal degree indicator (Mahalanobis distance) is equal to or greater than the first threshold value is not continued for the first time or longer as a second state, and evaluates a state where the state where the abnormal degree indicator (Mahalanobis distance) is equal to or greater than the first threshold value is continued for the first time or longer as a third state.

As a result, the operation state of the monitoring target can be evaluated in three classifications of a normal state, an abnormal state, and a state that is not abnormal but is not normal, in addition to whether or not the abnormality has occurred.

(5) A fifth aspect relates to the monitoring system according to (4), in which, when the operation state evaluation unit performs the evaluation as the third state, the first determination unit determines that the abnormality has occurred at a time point going back the first time from a time point of the evaluation.

As a result, the time point at which the abnormality has occurred can be understood.

(6) A sixth aspect relates to the monitoring system according to (4) or (5), further including: a statistical processing unit that generates a graph showing a transition of the operation state of the monitoring target, based on an evaluation result obtained by the operation state evaluation unit in a past predetermined period.

As a result, the transition and the tendency of the operation state can be understood.

(7) A seventh aspect relates to the monitoring system according to any one of (4) to (6), further including: a statistical processing unit that extracts a time during which the operation state of the monitoring target is the second state, based on an evaluation result obtained by the operation state evaluation unit in a past predetermined period, and generates a list of the extracted times.

As a result, the tendency of the occurrence frequency or the length of the operation state to be the second state can be understood.

(8) An eighth aspect relates to the monitoring system according to any one of (4) to (7), further including: a statistical processing unit that calculates a histogram showing a frequency for each length of a time during which the operation state of the monitoring target is the second state, based on an evaluation result obtained by the operation state evaluation unit in a past predetermined period.

As a result, a ratio of the noise tendency in the operation state determined as the state 2 or a ratio of the state close to the abnormality can be understood.

(9) A ninth aspect relates to the monitoring system according to any one of (4) to (8), in which, when the state where the abnormal degree indicator (Mahalanobis distance) is equal to or greater than the first threshold value is continued for a predetermined second time or longer, which is shorter than the first time, the operation state evaluation unit evaluates that the operation state of the monitoring target is a state where monitoring is required.

As a result, it is possible to detect that the state is in a state equivalent to an abnormality determination condition even though the abnormality determination condition is not satisfied.

(10) A tenth aspect relates to the monitoring system according to any one of (1) to (9), further including: a filter unit that performs filter processing of removing a high-frequency component from the abnormal degree indicator (Mahalanobis distance) calculated by the indicator value calculation unit, in which the first determination unit determines whether or not the abnormality has occurred, by using the abnormal degree indicator (Mahalanobis distance) after the filter processing.

As a result, the noise resistance of the MD value can be improved.

(11) An eleventh aspect relates to the monitoring system according to any one of (4) to (10), further including: an operation state prediction unit that calculates a probability of a transition of the operation state of the monitoring target among respective states of the first state, the second state, and the third state, based on an evaluation result obtained by the operation state evaluation unit in a past predetermined period, and predicts a future operation state based on the calculated probability.

As a result, the prediction can be performed in addition to the determination of the operation state of the monitoring target. For example, the abnormality can be predicted in addition to the abnormality detection and the abnormality determination.

(12) A twelfth aspect relates to a monitoring method including: a step of acquiring measured values measured by a plurality of sensors provided in a monitoring target; a step of calculating an abnormal degree indicator (Mahalanobis distance) based on the measured values and a predetermined unit space; and a step of determining that an abnormality has occurred in the monitoring target when a state where the abnormal degree indicator (Mahalanobis distance) is equal to or greater than a predetermined first threshold value is continuously or intermittently continued for a predetermined first time or longer.

(13) A thirteenth aspect relates to a program causing a computer 900 to execute a process including: a step of acquiring measured values measured by a plurality of sensors provided in a monitoring target; a step of calculating an abnormal degree indicator (Mahalanobis distance) based on the measured values and a predetermined unit space; and a step of determining that an abnormality has occurred in the monitoring target when a state where the abnormal degree indicator (Mahalanobis distance) is equal to or greater than a predetermined first threshold value is continuously or intermittently continued for a predetermined first time or longer.

Industrial Applicability

With the monitoring system, the monitoring method, and the program described above, it is possible to accurately determine the event occurring in the monitoring target.

Reference Signs List

10, 10A, 10B, 10D, 10E: monitoring system
101: data acquisition unit
102: setting reception unit
103: MD value calculation unit
104: first determination unit
105: second determination unit
106: output unit
107: storage unit
108: threshold value calculation unit
109: operation state evaluation unit
110: statistical processing unit
111: filter unit
112: operation state prediction unit
900: computer
901: CPU
902: main storage device
903: auxiliary storage device
904: input/output interface
905: communication interface

**Claims**

1. A monitoring system comprising:

   a data acquisition unit that acquires measured values measured by a plurality of sensors provided in a monitoring target;
   an indicator value calculation unit that calculates an abnormal degree indicator based on the measured values and a predetermined sample; and
   a first determination unit that determines that an abnormality has occurred in the monitoring target when a state where the abnormal degree indicator is equal to or greater than a predetermined first threshold value is continuously or intermittently continued for a predetermined first time or longer.

2. The monitoring system according to Claim 1, further comprising:
   a threshold value calculation unit that calculates a combination of the first threshold value and the first time such that a value of a predetermined loss function for calculating magnitude of an error in a determination result of the first determination unit is minimized, in which the loss function uses, as a parameter, a probability that no abnormality has occurred in the monitoring target when the first determination unit determines that the abnormality has occurred and/or a probability that the abnormality has occurred in the monitoring target when the first determination unit does not determine that the abnormality has occurred.

3. The monitoring system according to Claim 1 or 2, further comprising:
   a second determination unit that determines that an event requiring attention has occurred in the monitoring target, based on the measured value measured by one or a plurality of sensors among the plurality of sensors and a threshold value provided for each of the measured values.

4. The monitoring system according to Claim 1 or 2, further comprising:

   an operation state evaluation unit that evaluates an operation state of the monitoring target,
   wherein the operation state evaluation unit evaluates a state where the abnormal degree indicator is less than the first threshold value as a first state, evaluates a state where the state where the abnormal degree indicator is equal to or greater than the first threshold value is not continued for the first time or longer as a second state, and evaluates a state where the state where the abnormal degree indicator is equal to or greater than the first threshold value is continued for the first time or longer as a third state.

**5.** The monitoring system according to Claim 4,
wherein, when the operation state evaluation unit performs the evaluation as the third state, the first determination unit determines that the abnormality has occurred at a time point going back the first time from a time point of the evaluation.

**6.** The monitoring system according to Claim 4, further comprising:
a statistical processing unit that generates a graph showing a transition of the operation state of the monitoring target, based on an evaluation result obtained by the operation state evaluation unit in a past predetermined period.

**7.** The monitoring system according to Claim 4, further comprising:
a statistical processing unit that extracts a time during which the operation state of the monitoring target is the second state, based on an evaluation result obtained by the operation state evaluation unit in a past predetermined period, and generates a list of the extracted times.

**8.** The monitoring system according to Claim 4, further comprising:
a statistical processing unit that calculates a histogram showing a frequency for each length of a time during which the operation state of the monitoring target is the second state, based on an evaluation result obtained by the operation state evaluation unit in a past predetermined period.

**9.** The monitoring system according to Claim 4,
wherein, when the state where the abnormal degree indicator is equal to or greater than the first threshold value is continued for a predetermined second time or longer, which is shorter than the first time, the operation state evaluation unit evaluates that the operation state of the monitoring target is a state where monitoring is required.

**10.** The monitoring system according to Claim 1 or 2, further comprising:

a filter unit that performs filter processing of removing a high-frequency component from the abnormal degree indicator calculated by the indicator value calculation unit,
wherein the first determination unit determines whether or not the abnormality has occurred, by using the abnormal degree indicator after the filter processing.

**11.** The monitoring system according to Claim 4, further comprising:
an operation state prediction unit that calculates a probability of a transition of the operation state of the monitoring target among respective states of the first state, the second state, and the third state, based on an evaluation result obtained by the operation state evaluation unit in a past predetermined period, and predicts a future operation state based on the calculated probability.

**12.** A monitoring method comprising:

a step of acquiring a measured value measured by a sensor provided in a monitoring target;
a step of calculating an abnormal degree indicator based on the measured value and a predetermined sample; and
a step of determining that an abnormality has occurred in the monitoring target when a state where the abnormal degree indicator is equal to or greater than a predetermined first threshold value is continuously or intermittently continued for a predetermined first time or longer.

**13.** A program causing a computer to execute a process comprising:

a step of acquiring a measured value measured by a sensor provided in a monitoring target;
a step of calculating an abnormal degree indicator based on the measured value and a predetermined sample; and
a step of determining that an abnormality has occurred in the monitoring target when a state where the abnormal degree indicator is equal to or greater than a predetermined first threshold value is continuously or intermittently continued for a predetermined first time or longer.

## FIG. 1

~10

MONITORING SYSTEM

WATER HEATER ~1

| | |
|---|---|
| DATA ACQUISITION UNIT | ~101 |
| SETTING RECEPTION UNIT | ~102 |
| MD VALUE CALCULATION UNIT | ~103 |
| FIRST DETERMINATION UNIT | ~104 |
| SECOND DETERMINATION UNIT | ~105 |
| OUTPUT UNIT | ~106 |
| STORAGE UNIT | ~107 |

## FIG. 2

| VARIABLE | UNIT | MEANING | EXAMPLE |
|---|---|---|---|
| MD THRESHOLD VALUE | - | THRESHOLD VALUE OF ABNORMAL DEGREE SCORE | 4 |
| NUMBER-OF-TIMES THRESHOLD VALUE | TIMES | THRESHOLD VALUE OF NUMBER OF TIMES OF MD THRESHOLD EXCEEDANCE | 10 TIMES |
| ΔT1 | SECONDS | CYCLE OF MD THRESHOLD VALUE DETERMINATION | 60 SECONDS |

# FIG. 3

```
                    ( START )
                        |
              ┌─────────┘
              ▼                            ~S1
    ┌──────────────────────────────┐
    │  INITIALIZE COUNTER AND FLAG  │
    └──────────────────────────────┘
              │                   ◄──────────────┐
              ▼                            ~S2    │
    ┌──────────────────────────────┐             │
    │      ACQUIRE LATEST SAMPLE    │             │
    └──────────────────────────────┘             │
              │                                   │
              ▼               ~S3                 │
         ◇ HAS ΔT1 HAS ◇─────── NO ──────┐        │
         ◇  ELAPSED?  ◇                  │        │
              │ YES                      │        │
              ▼               ~S4        │        │
    ┌──────────────────────────────┐     │        │
    │      CALCULATE MD VALUE       │     │        │
    └──────────────────────────────┘     │        │
              │                           │        │
              ▼               ~S5         │        │
   NO ◄─── ◇ MD VALUE OR ◇                │        │
           ◇  GREATER?  ◇                 │        │
              │ YES          ~S6          │        │
              ▼                           │        │
    ┌──────────────────────────────┐      │        │
    │ ADD 1 TO MD THRESHOLD         │      │        │
    │   EXCEEDANCE COUNTER          │      │        │
    └──────────────────────────────┘      │        │
              │                            │        │
              ▼                    ~S7     │        │
         ◇        MD            ◇          │        │
         ◇ THRESHOLD EXCEEDANCE ◇── NO ──┐ │        │
         ◇ COUNTER ≥ NUMBER-    ◇        │ │        │
         ◇ OF-TIMES THRESHOLD   ◇        │ │        │
         ◇       VALUE?         ◇        │ │        │
              │ YES       ~S8            │ │   ~S9  │
              ▼                          ▼ ▼        │
    ┌──────────────────────┐    ┌──────────────────┐│
    │      ISSUE ALERT      │    │   WAIT FOR ΔT1   ├┘
    └──────────────────────┘    └──────────────────┘
              │
              ▼               ~S10
   NO ◄─── ◇ MONITORING ◇
           ◇  FINISH?   ◇
              │ YES
              ▼
           ( END )
```

FIG. 4A

# FIG. 4B

EP 4 542 323 A1

# FIG. 5

~10A

MONITORING SYSTEM

~1

| WATER HEATER | → | DATA ACQUISITION UNIT | —101 |

SETTING RECEPTION UNIT —102

MD VALUE CALCULATION UNIT —103

FIRST DETERMINATION UNIT —104

SECOND DETERMINATION UNIT —105

OUTPUT UNIT —106

STORAGE UNIT —107

THRESHOLD VALUE
CALCULATION UNIT —108

## FIG. 6

START

SET LOSS FUNCTION — S11

SET THRESHOLD VALUE AND LIKE — S12

TRIAL ABNORMALITY DETERMINATION PROCESSING — S13

HAS PREDETERMINED PERIOD ELAPSED? — S14

NO

YES

CALCULATE EVALUATION VALUE — S15

FINISHED? — S16

NO

YES

OUTPUT THRESHOLD VALUE AND LIKE SUCH THAT EVALUATION VALUE IS MINIMIZED — S17

END

## FIG. 7

WATER HEATER ~1

MONITORING SYSTEM ~10B

| DATA ACQUISITION UNIT | —101 |
| SETTING RECEPTION UNIT | —102 |
| MD VALUE CALCULATION UNIT | —103 |
| FIRST DETERMINATION UNIT | —104 |
| SECOND DETERMINATION UNIT | —105 |
| OUTPUT UNIT | —106 |
| STORAGE UNIT | —107 |
| OPERATION STATE EVALUATION UNIT | —109 |

## FIG. 8A

STATE 1 (GREEN)

STATE 2 (YELLOW)

STATE 3 (RED)

## FIG. 8B

| STATE | TRANSITION CONDITIONS |
|---|---|
| 1→2 | MD VALUE (t) ≥ $\theta_D$ |
| 2→1 | MD VALUE (t) < $\theta_D$ |
| 2→3 | MD VALUE (t) ≥ $\theta_D$ AND $t-Ty > \tau$ |

\* FOR TRANSITIONS OF STATE 1 AND STATE 2, HYSTERESIS CONDITION MAY BE PROVIDED.

## FIG. 9

START

ACQUIRE $\theta_D$ AND $\tau$ ⌐S21

ACQUIRE MD VALUE ⌐S22

EVALUATE OPERATION STATE ⌐S23

RECORD EVALUATION RESULT AND LIKE ⌐S24

OUTPUT EVALUATION RESULT ⌐S25

END

## FIG. 10

⌐10C

| MONITORING SYSTEM | |
|---|---|
| DATA ACQUISITION UNIT | 101 |
| SETTING RECEPTION UNIT | 102 |
| MD VALUE CALCULATION UNIT | 103 |
| FIRST DETERMINATION UNIT | 104 |
| SECOND DETERMINATION UNIT | 105 |
| OUTPUT UNIT | 106 |
| STORAGE UNIT | 107 |
| OPERATION STATE EVALUATION UNIT | 109 |
| STATISTICAL PROCESSING UNIT | 110 |

⌐1

WATER HEATER

# FIG. 11

## FIG. 12

STEP S7

CALCULATE ABNORMAL
OCCURRENCE TIME POINT

OUTPUT ALERT AND
ABNORMAL OCCURRENCE
TIME POINT

STEP S10

## FIG. 13

| DURATION (SECONDS) | START TIME POINT | END TIME POINT |
|---|---|---|
| 10 | 5/6/2010 18:03:40 | 5/6/2010 18:03:50 |
| 40 | 5/11/2010 12:04:50 | 5/11/2010 12:05:30 |
| 20 | 5/13/2010 11:39:50 | 5/13/2010 11:40:10 |
| 160 | 5/13/2010 13:09:50 | 5/15/2010 13:12:30 |
| ... | ... | ... |

# FIG. 14

AGGREGATION PERIOD: PAST ONE WEEK

HIGH POSSIBILITY OF NOISE        HIGH POSSIBILITY OF ACTUAL ABNORMALITY

# FIG. 15

# FIG. 16

WATER HEATER ~1

MONITORING SYSTEM ~10D

| DATA ACQUISITION UNIT | —101 |
| SETTING RECEPTION UNIT | —102 |
| MD VALUE CALCULATION UNIT | —103 |
| FIRST DETERMINATION UNIT | —104 |
| SECOND DETERMINATION UNIT | —105 |
| OUTPUT UNIT | —106 |
| STORAGE UNIT | —107 |
| FILTER UNIT | —111 |

# FIG. 17

STEP S3

S4'

CALCULATE MD VALUE ⟋S4

FILTER PROCESSING ⟋S4a

EXECUTE PROCESSING IN STEP S5
AND SUBSEQUENT STEPS BY USING
MD VALUE AFTER FILTER
PROCESSING

# FIG. 18

~10E

MONITORING SYSTEM

~1

| WATER HEATER |

DATA ACQUISITION UNIT ─101

SETTING RECEPTION UNIT ─102

MD VALUE CALCULATION UNIT ─103

FIRST DETERMINATION UNIT ─104

SECOND DETERMINATION UNIT ─105

OUTPUT UNIT ─106

STORAGE UNIT ─107

OPERATION STATE EVALUATION UNIT ─109

OPERATION STATE PREDICTION UNIT ─112

# FIG. 19A

X1

STATE 1 (GREEN)

X4    X2        X3    X7

STATE 2 (YELLOW)

X8

X6

STATE 3 (RED)

X5                X9

# FIG. 19B

$$\begin{bmatrix} \text{STATE 1 } (t+n\Delta t) \\ \text{STATE 2 } (t+n\Delta t) \\ \text{STATE 3 } (t+n\Delta t) \end{bmatrix} = \begin{bmatrix} X1, X2, X3 \\ X4, X5, X6 \\ X7, X8, X9 \end{bmatrix}^{n} \times \begin{bmatrix} \text{STATE 1 } (t) \\ \text{STATE 2 } (t) \\ \text{STATE 3 } (t) \end{bmatrix} \cdots (2)$$

# FIG. 20

START

CALCULATE STATE TRANSITION PROBABILITY — S41

ACQUIRE PREDICTION PERIOD — S42

PREDICT OPERATION STATE — S43

OUTPUT PREDICTION RESULT — S44

END

# FIG. 21

900

CPU 901

MAIN STORAGE DEVICE 902

AUXILIARY STORAGE DEVICE 903

INPUT/OUTPUT INTERFACE 904

COMMUNICATION INTERFACE 905

<table>
<tr><td colspan="2" align="center">**INTERNATIONAL SEARCH REPORT**</td><td>International application No.<br>**PCT/JP2023/024947**</td></tr>
</table>

**A. CLASSIFICATION OF SUBJECT MATTER**

*G05B 23/02*(2006.01)i
FI:   G05B23/02 302R

According to International Patent Classification (IPC) or to both national classification and IPC

**B. FIELDS SEARCHED**

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-80286 A (MITSUBISHI HITACHI POWER SYSTEMS, LTD.) 16 May 2016 (2016-05-16)<br>    paragraphs [0023]-[0061], fig. 1-8 | 1, 10, 12-13 |
| A | | 2-9, 11 |
| A | JP 2021-176088 A (ESPEC CORP) 04 November 2021 (2021-11-04)<br>    entire text, all drawings | 1-13 |

☐ Further documents are listed in the continuation of Box C.      ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **15 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/024947**

| Patent document cited in search report | | | Publication date (day/month/year) | Patent family member(s) | | | Publication date (day/month/year) |
|---|---|---|---|---|---|---|---|
| JP | 2016-80286 | A | 16 May 2016 | US 2017/0211900 A1 paragraphs [0033]-[0089], fig. 1-8 KR 10-2017-0024607 A CN 106662417 A | | | |
| JP | 2021-176088 | A | 04 November 2021 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022118438 A

- JP 2019024305 A